# FASCICULE DE BREVET EUROPEEN

(11) **EP 0 490 718 B1**
(45) Date de publication et mention de la délivrance du brevet: **27.04.1994**
(21) Numéro de dépôt: 91403075.4
(22) Date de dépôt: 15.11.1991
(51) Int. Cl.: F16F 13/00, B60K 5/12

(54) **Cale hydroélastique**
Hydroelastisches Lager
Hydroelastic mounting

(30) Priorité: 10.12.1990 FR 9015440
(43) Date de publication de la demande: 17.06.1992
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, F-35410 Domloup (FR); Robic, Pascal, F-35000 Rennes (FR)
(74) Mandataire: Obolensky, Michel

(56) Documents cités:
- EP-A- 0 163 817
- EP-A- 0 163 949
- EP-A- 0 347 666
- EP-A- 0 358 538
- FR-A- 2 642 493
- PATENT ABSTRACTS OF JAPAN vol. 13, no. 225 (M-830)(3573) 25 Mai 1989
- PATENT ABSTRACTS OF JAPAN vol. 10, no. 307 (M-527)(2363) 18 Octobre 1986
- NTIS TECH NOTES. no. 12, Décembre 1984, SPRINGFIELD, VA US page 1022; ARNOLD R.: 'SHOCK MOUNTING FOR HEAVY MACHINES'

## Description

La présente invention concerne une cale hydroélastique destinée à être interposée entre deux ensembles à suspendre l'un par rapport à l'autre.

L'invention concerne plus particulièrement une cale pour la suspension d'un moteur dans un véhicule automobile.

L'invention concerne un perfectionnement des cales dites à colonne et à clapet du type comportant, agencées successivement selon la direction générale de sollicitation de la cale, une première armature, une masse en matériau élastomère reliée à la première armature, une chambre de travail délimitée au moins partiellement par la masse en matériau élastomère, une cloison mobile qui délimite la chambre de travail et dont les déplacements selon ladite direction sont contrôlés, une chambre d'expansion délimitée par la cloison mobile et par une membrane souple, et une seconde armature reliée à la masse en matériau élastomère, les chambres de travail et d'expansion étant remplies au moins partiellement d'un liquide et étant reliées entre elles par un passage de communication.

Dans ce type de cale, on appelle clapet la cloison mobile qui permet de faire varier la raideur de la cale dans une certaine plage de fréquence.

Dans ce type de cale, la raideur de filtrage des sollicitations provenant du groupe motopropulseur, qui pour un quatre cylindre sont les sollicitations dont la fréquence correspond à l'harmonique d'ordre deux du régime de rotation du moteur, doit être rendue la plus faible possible car elle participe à la propagation du bruit par voie solide dans l'habitacle du véhicule. Ce bruit, qui est généralement appelé bourdonnement, devient très rapidement insupportable et n'est pas admissible dans le cas d'un véhicule de haut de gamme.

Afin de résoudre ce problème, il est possible de piloter par voie externe le clapet, c'est-à-dire d'agir sur la cloison mobile, pour diminuer la raideur de la cale jusqu'à une valeur nulle. Le principe d'action sur la cloison mobile résulte du comportement vibratoire de cette dernière.

La cloison mobile sollicitée à une fréquence inférieure à sa fréquence de résonnance, produit un effet d'anti-résonnance pouvant alors réduire la raideur globale de la cale jusqu'à faire tendre celle-ci vers une valeur nulle.

En effet, la cloison mobile lors de sa résonnance peut produire un effort en opposition de phase et de valeur identique à la sollicitation de la raideur porteuse. La raideur globale de la cale est alors la résultante qui est nulle.

La valeur de la résonnance est fonction de l'amortissement visqueux auquel est soumis la cloison mobile lors de son débattement.

La fréquence de cette résonnance est fonction de divers paramètres, et notamment de la masse de la cloison mobile, de sa raideur propre, de la raideur de la tenue à la pression de la masse en matériau élastomère, de la raideur à la tenue de la pression de la membrane, de la section efficace de la cloison mobile, de la section de piston équivalent de la masse en matériau élastomère et de la section équivalente de la membrane.

Il apparaît donc qu'il est possible de modifier la fréquence de résonnance et par conséquent la position en fréquence du creux de raideur de la cale en faisant varier la raideur de la cloison mobile.

Le principe utilisé pour l'invention consiste donc à modifier par voie externe la raideur de la cloison mobile pour adapter le creux de raideur sur la fréquence de sollicitation de l'harmonique principale du groupe motopropulseur.

Conformément à la caractéristique principale de l'invention, la cale comporte des moyens déformables élastiquement qui coopèrent avec la cloison mobile pour en limiter les déplacements et des moyens de commande pour appliquer un effort de déformation aux moyens déformables.

Cette conception selon l'invention est particulièrement avantageuse car elle est simple et de coût particulièrement faible. Une simple commande par un mouvement quasi-statique permet d'obtenir une raideur nulle en comportement dynamique.

La conception selon l'invention est beaucoup plus simple que celles connues de l'état de la technique, telle que par exemple du document FR-A-2.627.565, dans lequel la cale est pilotée en dynamique et nécessite donc la mise en oeuvre de moyens particulièrement coûteux. La commande ou pilotage en dynamique est de conception complexe car le système doit produire une sollicitation précise en phase avec l'excitation moteur. Par ailleurs ce type de système à commande dynamique n'est pas satisfaisant car il peut produire des harmoniques qui sont alors responsables de bruits à fréquences plus élevées.

Selon d'autres caractéristiques de l'invention :
- la cloison mobile présente sensiblement la forme d'un disque relié par son bord périphérique à la seconde armature, la membrane présentant en section un profil de révolution et étant agencée coaxialement à la cloison mobile, les moyens déformables élastiquement comportant au moins un bras de liaison qui s'étend sensiblement depuis la périphérie de la cloison mobile jusqu'à la zone centrale de la membrane, les moyens de commande étant agencés à l'extérieur de la chambre d'expansion et agissant sur la membrane dans la zone centrale de cette dernière selon une direction sensiblement confondue avec l'axe commun à la membrane et au disque ;
- les moyens déformables comportent une pluralité de bras de liaison et répartis de manière régulière autour de l'axe de la membrane ;
- les bras de liaison sont reliés entre eux pour constituer un organe déformable de forme tronconique dont la paroi est percée d'orifices calibrés ;
- le bord périphérique de la cloison mobile est monté serré de manière étanche entre les bords circulaires intérieurs en vis-à-vis de deux plaques annulaires rigides ;
- le bord périphérique circulaire de l'organe déformable tronconique est monté serré entre le bord périphérique de la cloison mobile et le bord circulaire intérieur d'une des deux plaques annulaires ;
- les moyens déformables élastiquement sont réalisés venus de matière avec la membrane souple ;
- les moyens de commande comportent un noyau monté mobile axialement par rapport à la seconde armature et dont une extrémité est fixée à la zone centrale de la membrane ;
- l'extrémité du noyau est une portion cylindrique et en ce que ladite zone centrale comporte une douille centrale dont la paroi est adhérisée à la zone centrale et dans laquelle est emmanchée serrée ladite portion cylindrique ;
- la plaque annulaire disposée axialement du côté de la masse en matériau élastomère comporte une partie qui présente en section un profil de révolution qui s'étend depuis le bord circulaire intérieur de cette plaque vers l'intérieur de la chambre de travail et qui comporte au moins un orifice de passage du liquide ;
- la partie de révolution comporte un orifice central permettant le passage d'une masse de tarage de la cloison mobile fixée à cette dernière ;
- la paroi de la partie de révolution est percée d'orifices calibrés.

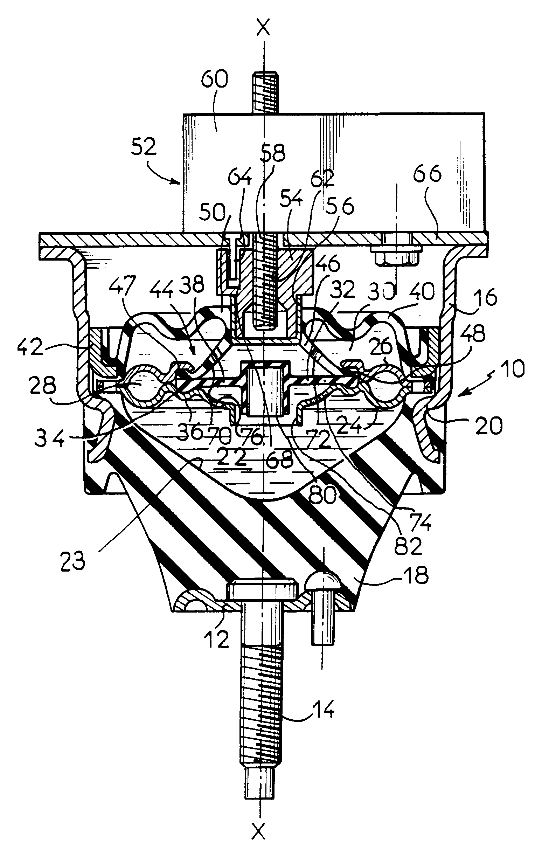

D'autres caractéristiques et avantages de l'invention apparaîtront à la lecture de la description détaillée qui va suivre pour la compréhension de laquelle on se reportera au dessin annexé dont la figure unique est une vue en coupe axiale d'un mode de réalisation préférée d'une cale hydroélastique réalisée conformément aux enseignements de l'invention.

On reconnaît sur la figure une cale hydroélastique 10 de forme générale de révolution autour d'un axe X-X.

La cale comporte une première armature 12 prévue pour être reliée à la structure de la caisse d'un véhicule automobile par une liaison filetée 14.

La première armature 12 est reliée à une seconde armature cylindrique 16 par une masse en matériau élastomère 18 dont la face plane inférieure est adhérisée à la première armature 12.

L'armature cylindrique 16 comporte au voisinage de son extrémité axiale inférieure un épaulement radial interne 20 qui est noyé dans la masse en matériau élastomère 18.

La cale 10 comporte une chambre de travail 22 qui est délimitée en partie par la masse en matériau élastomère dont la face supérieure 23 est évidée à cet effet.

La chambre de travail 22 est également délimitée par une première plaque annulaire 24 qui coopère avec une seconde plaque annulaire complémentaire 26 pour constituer un ensemble connu sous le nom de cassette.

Les deux plaques 24 et 26 délimitent entre elles un passage ou canal 28 qui met la chambre de travail 22 en communication avec une chambre d'expansion 30.

La chambre de travail 22 est enfin délimitée par une cloison mobile 32 qui s'étend dans un plan radial perpendiculaire à l'axe X-X.

La cloison mobile 32 est réalisée en matériau élastomère déformable élastiquement et présente la forme générale d'un disque dont le bord radial périphérique 34 est reçu dans une portion de profil correspondant 36 de la première plaque annulaire 24 formée au voisinage de son bord circulaire intérieur.

La chambre d'expansion 30 est délimitée d'une part par la seconde plaque 26 et par la face supérieure 38 de la cloison mobile 32 et, d'autre part, par une membrane souple en matériau élastomère déformable 40.

La membrane souple 40 comporte un renfort extérieur cylindrique métallique 42 qui est serti dans la paroi interne de la seconde armature cylindrique 16 de manière à assurer l'étanchéité de la chambre d'expansion 30 grâce à la coopération du matériau élastomère avec la face supérieure de la plaque 26 dans la zone du bord circulaire extérieur de cette dernière.

Les chambres de travail 22 et d'expansion 40 sont remplies d'un liquide qui peut circuler de l'une à l'autre à travers le passage 28 de manière à constituer une cale hydroélastique du type à colonne d'amortissement.

Conformément à l'invention, la cale 10 comporte des moyens déformables élastiquement 44 qui coopèrent avec la face supérieure 38 de la cloison mobile 32 pour contrôler les déplacements de cette dernière selon la direction de l'axe X-X.

Dans le mode de réalisation préféré de l'invention représentée à la figure, les moyens déformables élastiquement 44 sont constitués par un organe de forme générale tronconique 46 réalisé en matériau élastomère déformable élastiquement et venu de matière avec la membrane 40.

Le bord radial périphérique inférieur de grand diamètre 48 de la partie tronconique 46 est monté serti par une portion de profil correspondant 47 de la seconde plaque 26 et serré de manière étanche avec le bord périphérique 34 de la cloison mobile 38.

En coupe par un plan axial, et comme cela est représenté à la figure, la partie conique 46 définit deux bras déformables élastiquement qui s'étendent depuis le bord périphérique inférieur 48 jusqu'à la zone centrale 50 de la membrane déformable 40 à laquelle est relié le bord circulaire supérieur de plus petit diamètre de la partie tronconique 46.

Conformément à l'invention, la cale comporte également des moyens 52 pour appliquer aux moyens déformables 44 un effort de déformation selon la direction de l'axe X-X.

Les moyens 52 comportent un noyau central 54 de profil général cylindrique emmanché serré au montage dans une douille métallique 56 adhérisée dans la zone centrale 50 de la membrane souple 40.

Les moyens de commande 52 comportent également une vis 58 qui est entraînée en rotation par un actionneur électromagnétique 60 et qui coopère avec un filetage interne 62 formé dans le noyau 54.

Afin de convertir la rotation de la vis 58 en un déplacement axial du noyau 54, ce dernier est empêché de tourner grâce à un pion 64 qui est fixé sur une plaque radiale 66 de fermeture du bord supérieur de la seconde armature cylindrique 16 et qui est reçu dans un trou correspondant 68 du noyau 54.

On comprend qu'un déplacement axial du noyau 54 en direction de la cloison mobile, c'est-à-dire vers le bas en considérant la figure, a pour effet de provoquer une déformation de la partie tronconique 46, les bras venant alors appuyer sur la face supérieure 38 de la cloison mobile 32 par l'intermédiaire de leur face interne 70.

La coopération plus ou moins importante de l'organe déformable élastiquement 44 avec la cloison mobile 32 a pour effet de modifier la fréquence de résonnance de la cloison mobile 32.

Les moyens de commande 52 sont par exemple pilotés en fonction du régime de rotation du groupe motopropulseur auquel est reliée la seconde armature 16.

La partie tronconique 46 comporte une série de trous calibrés 72 qui permettent de réaliser un équilibre dans le liquide et qui ont un effet sur le phénomène d'anti-résonnance.

En effet, l'anti-résonnance de la cloison mobile 32 dépend de ses caractéristiques élastiques propres, de l'effort que lui applique l'organe déformable 44, mais également des déplacements du liquide contenu dans la chambre d'expansion 40.

Les trous calibrés 72 d'évacuation du liquide ont une section déterminée de manière qu'ils occasionnent une perte de charge qui définit alors la valeur de l'effet d'amortissement visqueux qui s'exerce sur la cloison mobile 32.

De la même manière, la première plaque 24 qui délimite la chambre de travail 22 se prolonge radialement vers l'intérieur depuis son bord circulaire 36 par une portion 74 de profil de révolution qui, dans l'exemple représenté, est sensiblement hémisphérique. Des trous calibrés 76 sont prévus dans la portion 74 et assurent une fonction équivalente à celle des trous calibrés 72 dans la partie tronconique 46.

La fréquence de résonnance du clapet est également déterminée en fonction de la masse de tarage 80 qui lui est associée par adhérisation en son centre et qui se présente sous forme d'un cylindre qui se déplace avec la cloison mobile 32, un orifice central cylindrique correspondant 82 étant prévu à cet effet dans la portion de révolution 74 de la seconde plaque 24.

L'invention n'est pas limitée au mode de réalisation qui vient d'être décrit. Il est par exemple possible de remplacer le système d'actionnement à vis-écrou par un actionneur linéaire qui agit directement sur le noyau 54 selon la direction X-X.

## Revendications

1. Cale hydroélastique destinée à être interposée entre deux ensembles à suspendre l'un par rapport à l'autre, notamment pour la suspension d'un moteur dans un véhicule automobile, du type comportant, agencées successivement selon la direction générale (X-X) de sollicitation de la cale (10), une première armature (12), une masse en matériau élastomère (18) reliée à la première armature (12), une chambre de travail (22) délimitée au moins partiellement par la masse en matériau élastomère (18), une cloison mobile (32) qui délimite la chambre de travail (22) et dont les déplacements selon la direction (X-X) sont contrôlés, une chambre d'expansion (30) délimitée par la cloison mobile (32) et par une membrane souple (40), et une seconde armature (16) reliée à la masse en matériau élastomère (18), lesdites chambres de travail (22) et d'expansion (30) étant remplies au moins partiellement d'un liquide et étant reliées entre elles par un passage de communication (28), caractérisé en ce qu'il comporte des moyens (44) déformables élastiquement qui coopèrent avec ladite cloison mobile (32) pour en contrôler les déplacements et des moyens de commande (52) pour appliquer un effort de déformation auxdits moyens déformables (44).

2. Cale selon la revendication 1, caractérisée en ce que la cloison mobile (32) présente sensiblement la forme d'un disque relié par son bord périphérique extérieur (34) à la seconde armature (16), en ce que ladite membrane (40) présente en section un profil de révolution et est agencée coaxialement à la cloison mobile (32), et en ce que lesdite moyens déformables élastiquement (44) comportent au moins un bras de liaison qui s'étend sensiblement depuis la périphérie (34) de la cloison mobile (32) jusqu'à la zone centrale (50) de la membrane souple (40), lesdits moyens de commande (52, 54) étant agencés à l'extérieur de la chambre d'expansion (30) et agissant sur la membrane souple (40) dans la zone centrale (50) de cette dernière selon une direction sensiblement confondue avec l'axe de la membrane (40) et du disque (32).

3. Cale selon la revendication 2, caractérisée en ce que lesdits moyens déformables (44) comportent une pluralité de bras de liaison répartis de manière régulière autour de l'axe de la membrane.

4. Cale selon la revendication 3, caractérisée en ce que les bras sont reliés entre eux pour constituer un organe déformable de forme tronconique (46) dont la paroi est percée d'orifices calibrés (72).

5. Cale selon l'une quelconque des revendications 2 à 4, caractérisée en ce que le bord périphérique (34) de la cloison mobile (32) est monté serré de manière étanche entre les bords circulaires intérieurs en vis-à-vis (36, 47) de deux plaques annulaires rigides (24, 26).

6. Cale selon la revendication 5 prise en combinaison avec la revendication 4, caractérisée en ce que le bord périphérique circulaire (48) de l'organe déformable tronconique (46) est monté serré entre le bord périphérique (34) de la cloison mobile 32 et le bord circulaire intérieur d'une (26) desdites deux plaques annulaires (24, 26).

7. Cale selon l'une quelconque des revendications 2 à 6, caractérisée en ce que les moyens déformables élastiquement sont réalisés venue de matière avec la membrane souple (40).

8. Cale selon l'une quelconque des revendications 2 à 7, caractérisée en ce que lesdits moyens de commande (52) comportent un noyau (54) monté mobile axialement par rapport à la seconde armature (16) et dont une extrémité est fixée à la zone centrale (50) de la membrane souple (40).

9. Cale selon la revendication 8, caractérisée en ce que l'extrémité du noyau est une portion cylindrique et en ce que ladite zone centrale comporte une douille centrale (56) dont la paroi est adhérisée à la zone centrale (50) et dans laquelle est emmanchée serrée ladite portion cylindrique.

10. Cale selon la revendication 5, caractérisée en ce que la plaque annulaire (24) disposée axialement du côté de la masse en matériau élastomère (18) comporte une partie (74) qui présente en section un profil de révolution qui s'étend depuis son dit bord circulaire intérieur (36) vers l'intérieur de la chambre de travail (22) et qui comporte au moins un orifice (76) de passage du liquide.

11. Cale selon la revendication 10, caractérisée en ce que ladite partie de révolution comporte un orifice central (82) permettant le passage d'une masse (80) de tarage de la cloison mobile (32).

12. Cale selon la revendication 11, caractérisée en ce que la paroi de ladite partie de révolution est percée d'orifices calibrés (76).

## Patentansprüche

1. Hydroelastischer Lagerblock zur Montage zwischen zwei aneinander aufzuhängenden Einheiten insbesondere für die Aufhängung eines Motors in einem Kraftfahrzeug, der in der Hauptbelastungsrichtung (X-X) des Lagerblocks (10) nacheinander eine erste Armatur (12), eine mit der ersten Armatur (12) verbundene Masse (18) aus einem Elastomermaterial, eine wenigstens teilweise durch die Masse (18) aus Elastomermatial abgegrenzte Arbeitskammer (22), eine bewegliche Trennwand (32), die die Arbeitskammer (22) abgrenzt und deren Bewegungen in der Richtung (X-X) gesteuert sind, eine durch die bewegliche Trennwand (32) und eine biegsame Membran (40) abgegrenzte Expansionskammer (30) und eine zweite, mit der Masse (18) aus Elastomermaterial verbundene Armatur (16) besitzt, wobei die Arbeitskammer (22) und die Expansionskammer (30) wenigstens teilweise mit einer Flüssigkeit gefüllt sind und miteinander durch einen Verbindungsdurchgang (28) verbunden sind, dadurch gekennzeichnet, daß er elastisch verformbare Mittel (44), die mit der beweglichen Trennwand (32) zur Steuerung ihrer Bewegungen zusammenwirken, und Steuermittel (52) besitzt, die auf die verformbaren Mittel (44) eine Verformungskraft ausüben.

2. Lagerblock nach Anspruch 1, dadurch gekennzeichnet, daß die bewegliche Trennwand (32) im wesentlichen die Form einer Scheibe hat, die mit ihrem äußeren Umfangsrand (34) mit der zweiten Armatur (16) verbunden ist, daß die Membran (40) im Schnitt ein Rotationskörperprofil besitzt und koaxial zur beweglichen Trennwand (32) angeordnet ist und daß die elastisch verformbaren Mittel (44) wenigstens einen Verbindungsarm besitzen, der sich im wesentlichen vom Umfang (34) der beweglichen Trennwand (32) bis zum zentralen Bereich (50) der biegsamen Membran (40) erstreckt, wobei die Steuermittel (52, 54) außerhalb der Expansionskammer (30) angeordnet sind und auf die biegsame Membran (40) in ihrem zentralen Bereich (50) in einer im wesentlichen mit der Achse der Membran (40) und der Scheibe (32) zusammenfallenden Richtung wirken.

3. Lagerblock nach Anspruch 2, dadurch gekennzeichnet, daß die verformbaren Mittel (44) mehrere gleichmäßig um die Achse der Membran herum verteilte Verbindungsarme besitzen.

4. Lagerblock nach Anspruch 3, dadurch gekennzeichnet, daß die Arme so miteinander verbunden sind, daß sie ein verformbares kegelstumpfförmiges Organ (46) bilden, dessen Wand mit kalibrierten Öffnungen (72) versehen ist.

5. Lagerblock nach einem der Ansprüche 2 bis 4, dadurch gekennzeichnet, daß der Umfangsrand (34) der beweglichen Trennwand (32) zwischen den einander gegenüberstehenden kreisförmigen Innenrändern (36, 47) von zwei starren ringförmigen Platten (24, 26) dicht eingeklemmt ist.

6. Lagerblock nach Anspruch 5 zusammen mit Anspruch 4, dadurch gekennzeichnet, daß der kreisförmige Umfangsrand (48) des verformbaren kegelstumpfförmigen Organs (46) zwischen dem Umfangsrand (34) der beweglichen Trennwand (32) und dem kreisförmigen Innenrand einer (26) der beiden ringförmigen Platten (24, 26) eingeklemmt ist.

7. Lagerblock nach einem der Ansprüche 2 bis 6, dadurch gekennzeichnet, daß die elastisch verformbaren Mittel mit der biegsamen Membran (40) einstückig gebildet sind.

8. Lagerblock nach einem der Ansprüche 2 bis 7, dadurch gekennzeichnet, daß die Steuermittel (52) einen Kern (54) besitzen, der bezüglich der zweiten Armatur (16) axial beweglich montiert ist und dessen eines Ende am zentralen Bereich (50) der biegsamen Membran (40) befestigt ist.

9. Lagerblock nach Anspruch 8, dadurch gekennzeichnet, daß das Ende des Kerns ein zylindrisches Stück ist und daß der zentrale Bereich eine zentrale Buchse (56) aufweist, deren Wand am zentralen Bereich durch Haftung befestigt ist und in die das zylindrische Stück eingepresst ist.

10. Lagerblock nach Anspruch 5, dadurch gekennzeichnet, daß die axial auf der Seite der Masse (18) aus Elastomermaterial angeordnete ringförmige Platte (24) einen Teil (74) besitzt, der im Schnitt das Profil eines Rotatationskörpers aufweist, der sich von seinem kreisförmigen Innenrand (36) auf das Innere der Arbeitskammer (22) zu erstreckt und wenigstens eine Öffnung (76) zum Durchgang der Flüssigkeit besitzt.

11. Lagerblock nach Anspruch 10, dadurch gekennzeichnet, daß der Rotationskörper eine zentrale Öffnung (82) besitzt, die den Durchgang einer Masse (80) zum Tarieren der beweglichen Querwand (32) gestattet.

12. Lagerblock nach Anspruch 11, dadurch gekennzeichnet, daß die Wand des Rotationskörpers mit kalibrierten Öffnungen (76) versehen ist.

## Claims

1. A hydroelastic mounting intended to be interposed between two units to be suspended relative to each other, in particular for the suspension of an engine in a motor vehicle, of the type comprising, arranged successively along the general direction (X-X) wherein the mounting (10) is stressed, a first armature (12), a mass of elastomeric material (18) connected to the first armature (12), an operating chamber (22) delimited at least in part by the mass of elastomeric material (18), a movable diaphragm (32) which delimits the operating chamber (22) and whose displacements along the direction (X-X) are controlled, an expansion chamber (30) delimited by the movable diaphragm (32) and by a flexible membrane (40), and a second armature (16) connected to the mass of elastomeric material (18), the said operating chamber (22) and expansion chamber (30) being filled at least partly by a liquid and being interconnected by a communicating duct (28), characterized in that it includes elastically deformable means (44) which cooperate with the said movable diaphragm (32) so as to control its displacements, and control means (52) for applying a deforming force to the said deformable means (44).

2. A mounting according to claim 1, characterized in that the movable diaphragm (32) has substantially the shape of a disk joined at its outer peripheral edge (34) to the second armature (16), in that the said membrane (40) has a profile of revolution in cross-section and is arranged coaxially with the movable diaphragm (32), and in that the said elastically deformable means (44) include at least one connecting arm which extends substantially from the periphery (34) of the movable diaphragm (32) as far as the central zone (50) of the flexible membrane (40), the said control means (52, 54) being arranged outside the expansion chamber (30) and acting on the flexible membrane (40) in the central zone (50) of the latter along a direction substantially coinciding with the axis of the membrane (40) and of the disk (32).

3. A mounting according to claim 2, characterized in that the said elastically deformable means (44) include a plurality of connecting arms that are regularly distributed round the axis of the membrane.

4. A mounting according to claim 3, characterized in that the arms are interconnected so as to constitute a deformable element (46) of a frustoconical shape whose side is pierced by calibrated orifices (72).

5. A mounting according to any one of claims 2 to 4, characterized in that the peripheral edge (34) of the movable diaphragm (32) is mounted with a tight fit in a leakproof manner between the opposed internal circular edges (36, 47) of two rigid annular disks (24, 26).

6. A mounting according to claim 5 taken in conjunction with claim 4, characterized in that the peripheral circular edge (48) of the deformable frustoconical element (46) is mounted with a tight fit between the peripheral edge (34) of the movable diaphragm (32) and the internal circular edge of one (26) of the said two annular disks (24, 26).

7. A mounting according to any one of claims 2 to 6, characterized in that the elastically deformable means are obtained integrally with the flexible membrane (40).

8. A mounting according to any one of claims 2 to 7, characterized in that the said control means (52) include a core (54)

9. A mounting according to claim 8, characterized in that the end of the core is a cylindrical portion and in that the said central zone includes a central sleeve (56) whose side is bonded to the central zone (50) and wherein the said cylindrical portion is mounted with a tight fit.

10. A mounting according to claim 5, characterized in that the annular disk (24) that is axially disposed on the side of the mass of elastomeric material (18) includes a part (74) which has a profile of revolution in cross-section, which extends from its said internal circular edge (36) towards the inside of the operating chamber (22) and which includes at least one orifice (76) for the passing of the liquid.

11. A mounting according to claim 10, characterized in that the said part of revolution includes a central opening (82) allowing a mass (80) to pass for calibrating the movable diaphragm (32).

12. A mounting according to claim 11, characterized in that the side of the said part of revolution is pierced by calibrated orifices (76).
